# EUROPÄISCHE PATENTANMELDUNG

(11) **EP 0 673 812 A1**
(43) Veröffentlichungstag der Anmeldung: **27.09.1995**
(21) Anmeldenummer: 94103981.0
(22) Anmeldetag: 15.03.1994
(51) Int. Cl.: B60R 25/00

(54) **Diebstahlsicheres Kraftfahrzeug**

(71) Anmelder: Lukitsch, Michael, D-63863 Eschau (DE)
(72) Erfinder: Lukitsch, Michael, D-63863 Eschau (DE)
(74) Vertreter: Pöhner, Wilfried Anton, Dr.

(57) **Zusammenfassung**

Die Erfindung bezieht sich auf ein diebstahlsicheres Kraftfahrzeug, mit einem Fahrersitz (9), einem Kupplungs- (1) und/oder einem Brems- und/oder einem Gaspedal (2) sowie einer vor dem Fahrersitz (9) am Boden des Kraftfahrzeugs befestigten, über ein Scharnier (4) vor die Pedale (1, 2) geschwenkten Abdeckplatte (6), und empfiehlt, daß an der Abdeckplatte (6) eine drehbare Schwenkwelle (5) fixiert ist, daß ein Bügel (7) mit der Schwenkwelle (5) verbunden ist, und daß der Bügel (7) das Kupplungs- (1) und/oder Brems- und/oder Gaspedal (2) hintergreift.

## Beschreibung

Die Erfindung bezieht sich auf ein diebstahlsicheres Kraftfahrzeug, mit einem Fahrersitz, einem Kupplungs- und/oder einem Brems- und/oder einem Gaspedal sowie einer vor dem Fahrersitz am Boden des Kraftfahrzeugs befestigten, über ein Scharnier vor die Pedale geschwenkten Abdeckplatte.

Das Tür- und Lenkradschloß ergänzende, mechanisch arbeitende Diebstahlsicherungen für Kraftfahrzeuge sind in verschiedenen Ausführungen bekannt. Es finden beispielsweise das Lenkrad und einen Türgriff durchgreifende Ringschlösser oder ein Pedal, üblicherweise das Bremspedal, mit dem Lenkrad verbindende Teleskopstangen Verwendung. Ihr Nachteil besteht jedoch darin, daß sie mittels eines Bolzenschneiders oder einer Säge leicht durchtrennbar sind und somit das Fahrzeug unschwer entwendbar wird.

In der EP O 242 012 ist eine ebenfalls mechanisch arbeitende, die Pedale des Kraftfahrzeugs blockierende Diebstahlsicherung offenbart, bei der eine Abdeckplatte etwa vertikal vor die Pedale verschwenkt und mit einem Vorhängeschloß gesichert ist, um die Zugänglichkeit der Pedale zu verhindern. Als nachteilig ist bei dieser Sicherung anzusehen, daß vom Kraftfahrzeuginnenraum her sowohl das Vorhängeschloß als auch die zugehörige Einhängeöse relativ rasch und unproblematisch mit Hilfe einer Säge oder eines Bolzenschneiders durchtrennbar sind und die Sicherung danach leicht entfernbar ist. Es ist unschwer möglich, die Abdeckplatte seitlich zu umgreifen und herauszureißen oder so zu verbiegen, daß die Pedale in gewohnter Weise mit den Füßen bewegt werden können. Außerdem besteht die Möglichkeit, die Pedale oberhalb der Abdeckplatte durch geeignete Vorrichtungen zumindest vorübergehend zu betätigen, bis das Kraftfahrzeug anderenorts verbracht ist und die Diebstahlsicherung mit geeigneten Werkzeugen leicht entfernbar ist.

Ausgehend vom Stande der Technik liegt der Erfindung das Problem zugrunde, ein Kraftfahrzeug mit einer die Pedale sichernden Diebstahlsicherung so zu verbessern und weiterzuentwickeln, daß eine unbefugte Benutzung und ein Diebstahl deutlich erschwert ist.

Erfindungsgemäß wird die Aufgabe dadurch gelöst, daß an der Abdeckplatte eine drehbare Schwenkwelle fixiert ist, daß ein Bügel mit der Schwenkwelle verbunden ist, und daß der Bügel das Kupplungs- und/oder Brems- und/oder Gaspedal hintergreift.

Der Kerngedanke der Erfindung besteht darin, eine Diebstahlsicherung, die aus einer Abdeckplatte besteht und in eine etwa vertikale Position vor die Pedale geschwenkt ist, mit diesen durch einen Bügel mechanisch zu verbinden. Der Bügel ist beispielsweise in Höhe der Pedale oder an der oberen Stirnseite der Abdeckplatte an einer Schwenkwelle montiert und hintergreift das Kupplungs- und/oder Bremspedal und/oder Gaspedal. Die Pedale und die Abdeckplatte fixieren sich gegenseitig, so daß ein Betätigen der Pedale, ein Fahrtantritt und ein Diebstahl ausgeschlossen und gleichzeitig ein Verschwenken der Abdeckplatte verhindert ist. Diese ist über ein Scharnier mit einer Bodenplatte verbunden, die am Fahrzeug mittels einer Schraub-, Niet- oder Schweißverbindung fixiert ist. Da die Abdeckplatte das Scharnier und die Bodenplatte verdeckt, besteht mangels eines geeigneten Punktes zum Ansetzen eines Werkzeugs keine Möglichkeit, die Bodenplatte vom Fahrzeugboden zu lösen oder das Scharnier zu zerstören. Die Abdeckplatte verhindert außerdem eine Rotation der Schwenkwelle und eine Zerstörung des Bügels, da sie diese Elemente ebenfalls verdeckt. Ein möglichst hoher Befestigungspunkt des Bügels an der Abdeckplatte bewirkt, daß die zu ihrem gewaltsamen Verschwenken erforderliche Kraft besonders groß und und daher schwer aufzubringen ist.

Dem Besitzer des Kraftfahrzeugs erlaubt die Diebstahlsicherung, den die Pedale arretierenden Bügel durch eine (einem Sicherungsvorgang inverse) Schwenkbewegung an die Abdeckplatte anzulegen und über eine Rotation des Scharniers auf den Boden vor dem Fahrersitz zu verschwenken, so daß ein ungehindertes Betätigen der Pedale und eine ungestörte Fahrt möglich ist.

Die Vorteile der Erfindung bestehen insbesondere darin, daß die Diebstahlsicherung schwer aufbrechbar ist und daß somit ein Kraftfahrzeugdiebstahl stark erschwert ist. Außerdem kann sie in bereits vorhandene Kraftfahrzeuge nachträglich eingebaut werden.

Bei vielen Kraftfahrzeugen reichen das Kupplungs- und Bremspedal von oben her in den Fußraum hinein; um diese Pedale zu blockieren, ist empfohlen, die Schwenkwelle um eine horizontale Achse zu drehen, bis der Bügel die Pedale hintergreift. Vor einem Fahrtantritt wird sie zurückgedreht, bis der Bügel unterhalb der Pedale an der Abdeckplatte anliegt. Um einen möglichst kurzen, stabilen Bügel verwenden zu können und eine sichere Fixierung zu erreichen, ist die Schwenkwelle oberhalb oder in Höhe der Trittfläche der Pedale angeordnet. Ein Hintergreifen ausschließlich des Kupplungs- und Bremspedals ist bevorzugt, da ein Bügel ausreicht, um sie zu sichern. Das Gaspedal befindet sich gewöhnlich direkt auf dem Boden des Kraftfahrzeugs, so daß zu seiner Fixierung ein weiterer Bügel notwendig wäre. Eine zusätzliche Blockierung des Gaspedals ist jedoch nicht unbedingt erforderlich, da die Abdeckplatte auch seine Betätigung verhindert.

Reichen das Kupplungs- und/oder Brems- und/oder Gaspedal von unten her in den Fußraum des Kraftfahrzeugs hinein, ist auch dann möglich, diese Pedale mit dem Bügel zu hintergreifen. Vor einer Fahrt wird die Schwenkwelle ebenfalls um eine horizontale Achse gedreht, bis der Bügel oberhalb der Pedale an der Abdeckplatte anliegt. Sie ist aus Konstruktions- und Sicherheitsgründen unterhalb oder in Höhe der Trittflächen der Pedale montiert. Diese Anordnung ist bevorzugt, da sie besonders einfach realisierbar ist.

Grundsätzlich ist eine manuelle Rotation der Schwenkwelle vorsehbar. Aus Komfortgründen ist jedoch ein automatisch aktivierbarer, aus einem Elektromotor und einem Getriebe bestehender Antrieb bevorzugt. Dieser Motor ist raumsparend, jedoch hinreichend stabil auf der den Pedalen zugewandten Seite der Abdeckplatte befestigt. Die Verwendung des Elektromotors ist auch aus Sicherheitsgründen vorteilhaft, da er vom Fahrzeuginnenraum her nicht erreichbar ist und die Schwenkwelle somit nicht von Hand gedreht werden kann, während ein manueller, beispielsweise durch einen Schlüssel betätigter Antrieb einer unerwünschten, gewaltsamen Betätigung schwer widerstehen könnte. Ein Elektromotor ist beim Abstellen des Kraftfahrzeugs bevorzugt durch das Zündschloß steuerbar, so daß die Fixierung der Abdeckplatte nicht vergessen werden kann.

Die Inbetriebsetzung des Elektromotors erfolgt zweckmäßigerweise über eine Endschalter verwendende Steuerung, die ihn abschaltet, falls der Bügel die Pedale hintergreift oder an der Abdeckplatte anliegt.

Der Elektromotor ist vorteilhafterweise mit dem Bordnetz verbunden, um eine zusätzliche, mit externen Batterien oder anderen Stromquellen erfordernde Energieversorgung einzusparen.

Um zu verhindern, daß das Zündschloß kurzgeschlossen wird und der Elektromotor rotiert, ist die Verwendung eines separaten Schaltschlosses empfohlen, mit dem der Elektromotor vor und/oder nach einer Fahrt aktiviert wird. Es wird zweckmäßigerweise durch einen speziellen Schlüssel geschaltet, um nur dem Besitzer des Kraftfahrzeugs ein Betätigen zu erlauben, unbefugten Personen jedoch unmöglich zu machen.

Eine Schwachstelle besteht darin, daß das Schaltschloß aus der Abdeckplatte herausgerissen und der Elektromotor durch Überbrücken der Kontakte aktiviert werden kann. Um auch in diesem Fall eine Schwenkbewegung der Welle mit Sicherheit zu unterbinden, ist ein Schalter mechanisch mit dem Schaltschloß verbunden und verhindert ein Inbetriebsetzen des Elektromotors, falls das Schaltschloß herausgerissen und überbrückt ist. Eine Schwenkbewegung des Bügels, ein Betätigen der Pedale und ein Kraftfahrzeugdiebstahl ist weiter erschwert.

Weiterhin ist empfohlen, die Abdeckplatte so zu dimensionieren, daß sie den pedalseitigen Fußraum vollständig abdeckt. Der Vorteil besteht darin, daß ein Hintergreifen der Abdeckplatte durch Werkzeuge mangels eines geeigneten Angriffspunktes stark erschwert ist, so daß ein Herausreißen der Abdeckplatte und ein Kraftfahrzeugdiebstahl nur unter großen Anstrengungen möglich ist.

Zur Verbesserung der Diebstahlsicherheit bieten sich umlaufende, seitlich an der Abdeckplatte montierte Laschen an. Sie liegen zweckmäßigerweise, falls die Abdeckplatte nach dem Abstellen des Kraftfahrzeugs in etwa vertikaler Position verschwenkt ist, flächig an jenen Kraftfahrzeugteilen an, die die Abdeckplatte umgeben, sind also passend zur Form des Fußraumes, der Karosserie und der Konsole usw. gestaltet. Die Laschen bieten eine weitere Sicherung gegen ein Hintergreifen der Abdeckplatte durch Werkzeuge.

Falls die Abdeckplatte in eine näherungsweise horizontale Position verschwenkt, das Kraftfahrzeug also zum Antritt einer Fahrt vorbereitet ist, empfiehlt sich eine Verankerung der Abdeckplatte im Kraftfahrzeugboden. Sie erfolgt zweckmäßigerweise im stirnseitigen Bereich und verhindert ein unerwünschtes, Unfälle begünstigendes Verschwenken. Die Abdeckplatte liegt dabei vor dem Fahrersitz, da dieser Raum nicht durch die Füße des Fahrers oder anderweitig belegt ist.

Das Verschwenken der Abdeckplatte erfolgt in einer preiswerten, einfachen Ausgestaltung der Erfindung manuell. Aus Komfortgründen ist jedoch die Verwendung eines weiteren Elektromotors bevorzugt.

Weitere Einzelheiten, Merkmale und Vorteile der Erfindung lassen sich dem nachfolgenden Beschreibungsteil entnehmen, in dem anhand der Zeichnungen ein Ausführungsbeispiel der Erfindung näher erläutert wird. Sie zeigen in schematischer Darstellung in
- Figur 1: ein Kraftfahrzeug mit einer Diebstahlsicherung in Sperrposition
- Figur 2: ein Kraftfahrzeug mit einer Diebstahlsicherung in einer das Fahren ermöglichenden Position.

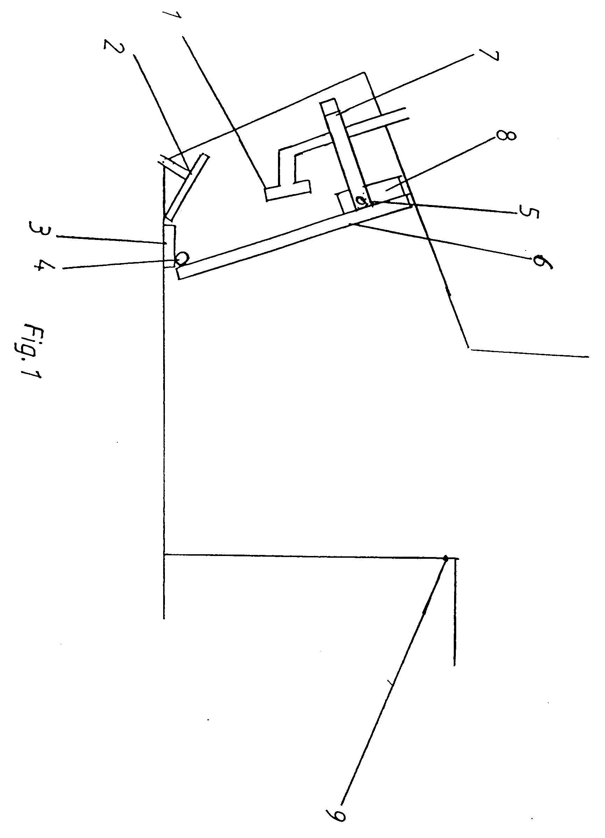

Im Raum vor dem Fahrersitz (9) eines Kraftfahrzeugs ist in bekannter Weise ein Gaspedal (2), das von unten in den Fußraum hineinreicht, ein Kupplungspedal (1), das mit einem nach oben verlaufendem Betätigungshebel versehen ist, und ein in der Zeichnung nicht erkennbares, vom Kupplungspedal (1) verdecktes Bremspedal angeordnet. In Figur 1 ist erkennbar, daß die Diebstahlsicherung in eine etwa vertikale Position geschwenkt ist und einen Fahrtantritt verhindert. Die Abdeckplatte (6) ist zwischen den Pedalen (1, 2) und dem Fahrersitz (9) angeordnet und über ein Scharnier (4) und eine Bodenplatte (3) beispielsweise durch eine Schraub-, Niet- oder Schweißverbindung am Kraftfahrzeugboden fixiert. Der das Kupplungs- (1) und Bremspedal hintergreifende Bügel (7) ist an der drehbaren Schwenkwelle (5) fixiert und vergrößert die Diebstahlsicherheit des Kraftfahrzeugs, da er beide Pedale blockiert und die Abdeckplatte (6) verankert. Die Rotation der Schwenkwelle (5) erfolgt durch einen Elektromotor (8) und wird, was in der Zeichnung nicht dargestellt ist, durch ein Schaltschloß betätigt.

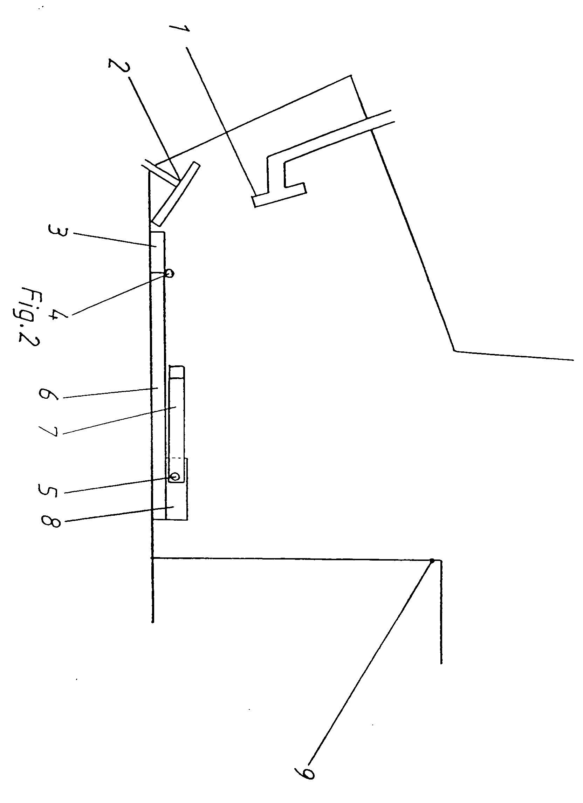

Aus Figur 2 ist erkennbar, daß die Diebstahlsicherung flach im fahrerseitigen Fußraum des Kraftfahrzeugs umlegbar ist, so daß die Pedale (1, 2) ungehindert erreichbar bleiben. Der Elektromotor (8) dreht vor einem Fahrtantritt den Bügel (7) aus der die Pedale (1) hintergreifenden Position, bis er an der Abdeckplatte (6) anliegt. Das Scharnier (4) erlaubt nunmehr, die Diebstahlsicherung auf den Boden vor dem Fahrersitz (9) zu schwenken. Die Rotation des Scharniers (4) erfolgt manuell, kann jedoch wie der Antrieb um die Schwenkachse (5) komfortablerweise elektromotorisch betätigt werden, wobei der Motor mit dem Elektromotor, der die Schwenkwelle (5) antreibt, parallel geschaltet ist. Die Abdeckplatte (6) ist im dargestellten Zustand zusätzlich aus Sicherheitsgründen in der Nähe des Fahrersitzes (9) im Kraftfahrzeugboden verankert, was aus der Zeichnung nicht ersichtlich ist.

Eine dem beschriebenen Vorgang entsprechende, invertierte Prozedur erlaubt nach dem Abstellen des Kraftfahrzeugs eine Positionierung und Arretierung der Diebstahlsicherung vor den Pedalen.

## Patentansprüche

1. Diebstahlsicheres Kraftfahrzeug, mit einem Fahrersitz, einem Kupplungs- und/oder einem Brems- und/oder einem Gaspedal sowie einer vor dem Fahrersitz am Boden des Kraftfahrzeugs befestigten, über ein Scharnier vor die Pedale geschwenkten Abdeckplatte, **dadurch gekennzeichnet**, daß an der Abdeckplatte (6) eine drehbare Schwenkwelle (5) fixiert ist,
daß ein Bügel (7) mit der Schwenkwelle (5) verbunden ist,
und daß der Bügel (7) das Kupplungs- (1) und/oder Brems- und/oder Gaspedal (2) hintergreift.

2. Kraftfahrzeug nach Anspruch 1, **dadurch gekennzeichnet**, daß das Kupplungs- (1) und/oder das Bremspedal von oben her in den Fußraum des Kraftfahrzeugs hineinreichen, und daß die Schwenkwelle (5) oberhalb oder in Höhe der Trittfläche des Kupplungs- (1) und/oder Bremspedals angeordnet und um eine horizontale Achse drehbar ist.

3. Kraftfahrzeug nach Anspruch 1, **dadurch gekennzeichnet**, daß das Kupplungs- (1) und/oder das Brems- und/oder das Gaspedal (2) von unten her in den Fußraum des Kraftfahrzeugs hineinreichen und daß die Schwenkwelle (5) unterhalb oder in Höhe der Trittfläche des Kupplungs- (1) und/oder Brems- und/oder Gaspedals (2) angeordnet und um eine horizontale Achse drehbar ist.

4. Kraftfahrzeug nach einem der Ansprüche 1 bis 3, **dadurch gekennzeichnet**, daß die Schwenkwelle (5) manuell und/oder mit einem aus einem Elektromotor und einem Getriebe bestehenden Antrieb (8) gedreht wird.

5. Kraftfahrzeug nach Anspruch 4, **dadurch gekennzeichnet**, daß der Elektromotor durch Endschalter in seiner Bewegung begrenzt ist.

6. Kraftfahrzeug nach Anspruch 4 oder 5, **dadurch gekennzeichnet**, daß der Elektromotor mit dem Bordnetz verbunden ist.

7. Kraftfahrzeug nach einem der Ansprüche 1 bis 6, **dadurch gekennzeichnet**, daß in der Abdeckplatte (6) ein Schaltschloß angebracht ist, mit dem der Elektromotor zum Antrieb der Schwenkwelle (5) mit dem Schaltschloß elektrisch verbunden ist.

8. Kraftfahrzeug nach Anspruch 7, **dadurch gekennzeichnet**, daß ein Schalter mechanisch mit dem Schaltschloß verbunden ist und ein Inbetriebsetzen des Elektromotors verhindert, falls das Schaltschloß entfernt ist.

9. Kraftfahrzeug nach einem der Ansprüche 1 bis 8, **dadurch gekennzeichnet**, daß die Abdeckplatte (6) den pedalseitigen Fußr den pedalseitigen Fußraum vol

10. Kraftfahrzeug nach einem der Ansprüche 1 bis 9, **dadurch gekennzeichnet**, daß die Abdeckplatte (6) umlaufend seitliche Laschen aufweist, die flächig an den sie umgebenden Teilen des Kraftfahrzeugs anliegen.

11. Kraftfahrzeug nach einem der Ansprüche 1 bis 10, **dadurch gekennzeichnet**, daß die Abdeckplatte (6) an ihrer Stirnseite im Kraftfahrzeugboden verankerbar ist.

12. Kraftfahrzeug nach einem der Ansprüche 1 bis 11, **dadurch gekennzeichnet**, daß die Verschwenkung der Abdeckplatte (6) um das Scharnier (4) manuell oder mit einem Elektromotor erfolgt.
